Europäisches Patentamt

European Patent Office

Office européen des brevets

(11) Publication number: **0 217 896**
**B1**

# EUROPEAN PATENT SPECIFICATION

(45) Date of publication of patent specification: **06.06.90**

(21) Application number: **86902388.7**

(22) Date of filing: **28.03.86**

(86) International application number:
**PCT/EP86/00193**

(87) International publication number:
**WO 86/05670 09.10.86 Gazette 86/22**

(51) Int. Cl.⁵: **A 47 J 31/00**

(54) COFFEE MAKING MACHINE FOR PREPARING EVERY TIME A CUP OF COFFEE TO TASTE.

(30) Priority: **28.03.85 NL 8500925**

(43) Date of publication of application:
**15.04.87 Bulletin 87/16**

(45) Publication of the grant of the patent:
**06.06.90 Bulletin 90/23**

(84) Designated Contracting States:
**AT BE CH DE FR GB IT LI LU NL SE**

(56) References cited:
**DE-A-2 432 141**
**FR-A- 931 540**
**FR-A-1 565 033**
**FR-A-2 067 808**
**US-A-3 552 976**
**US-A-3 666 558**

(73) Proprietor: **BOUMANS, Peter, Mathijs**
**De Bongerd 7**
**NL-6151 BR Munstergeleen (NL)**

(72) Inventor: **Boumans, Peter Mathijs**
**De Bongerd 7**
**6151 BR Munstergeleen (NL)**
Inventor: **Sobczak, Hendrik Jozef Jan**
**Achter de Kerk 7**
**6365 CP Schinnen (NL)**

(74) Representative: **van der Beek, George Frans, Ir.**
**et al**
**Nederlandsch Octrooibureau Scheveningseweg**
**82 P.O. Box 29720**
**NL-2502 LS 's-Gravenhage (NL)**

## Description

The invention relates to an apparatus for preparing coffee, comprising a brewing space for receiving said coffee and hot water, a filter in the lower wall of said space, means for moving a gas under pressure from below said filter upwardly through said filter as well as a discharge conduit below said filter.

An apparatus of this type has been disclosed in US—A—3 552 976. This known apparatus has been provided below the filter with a cylinder and piston which piston can be moved up and down by means of a crank shaft. During upward movement the piston can press a predetermined quantity of air upwardly through the filter and accordingly through the mixture of water and material or substance and can agitate this mixture of water and material. It is known that due to said agitation the quality of the drink can be improved. After agitation with piston performs a longer suction stroke by means of which the extract is sucked through the filter and can be discharged as soon as the piston during the second half of its downward stroke opens an outlet passage.

A piston moving in a cylinder has the disadvantage that its movement is irregular. It constantly accelerates and decelerates during changement of its direction of movement.

The speed of the air through the filter is critical for obtaining the right quality of the drink. If said speed is too high the air below the filter primarily is compressed and subsequently forced through the filter. If the speed is too low the agitation is insufficient. Changing the speed of the piston does not change this irregular behaviour. The piston generates a pulsation of air through the mixture of water and material slowly beginning and too soon forcing a large air bubble through the mixture. With other words the agitation of the mixturing during the upward stroke of the piston has only a short period during which the agitation is incomformity with type and quality of the material from which the drink has to be made. If one would like to adapt by changing the speed of the piston then this would not change the fact that there are periods of high speed and low speed and accordingly periods which are not suitable.

It is known to agitate the mixture of water and material by feeding air into the space from above by means of a conduit connected to an air pump, which conduit has its lower end at a distance above the bottom of the space receiving the mixture. Examples are found in FR—A—1 565 033 and DE—A—2 432 141.

This kind of agitation, however, has the disadvantage only to agitate the immediate environment of the outlet opening of the air tube and to leave unagitated or differently agitated the surrounding, in particular the areas below said outlet opening and the side walls which normally from or support the filter material.

Purpose of the invention is to obtain an apparatus by means of which in an extremely simple way proper agitation of the entire contents can be achieved.

A further object of the invention is to provide an apparatus of a simplicity such that existing apparatuses can be changed to become the apparatus according to the invention and have the same advantages.

According to the invention this aim in the first place is achieved in that the discharge conduit has a valve dowstream the filter and that said discharge conduit, between the filter and said valve has been connected to a source of gas under pressure capable of delivering a continuous flow into the discharge conduit and throug the filter after closure of the valve, said source having adjustable means for controlling the operation time and the quantity of gas supplied during the agitation period and that after completion of the operation time of the said source a valve, which valve forms the only means for controlling the flow of the drink through the filter and through the discharge conduit can be opened. The continuous flow of air bubbles, which flow cannot be obtained with the apparatus known from US—A—3 552 976 can be achieved in a simple way by using a pump capable of delivering such a flow. By adjusting said pump the quantity of gas and the time of operation all kinds of adaptations to the drink wanted and the individual taste can be achieved.

After preparation of the drink and this means also after agitation the drink is discharged. This maintains the achieved quality of the drink. With the apparatus according to US—A—3 552 976 suction through the filter takes place after agitation and this suction of the flow of hot water through the ground material or the like and through the filter affect the quality. With a constant flow the agitation throughout the mass of the mixture takes place with the same intensity from the very beginning until the end of the said time period.

Moreover the time period is adjustable by simple means such as a timer switch. Preferably the source of gas under pressure is an air pump and this can be the type of air pump as used e.g. in an aquarium. Such an air pump delivers a continuous flow of air during the time period the pump is switched on.

According to the invention it is preferred that a non-return valve has been arranged between the said source and the said point of connection to prevent flow in the direction towards the said source. This is desired to avoid fouling of the pump with particles present in the drink.

The valve between the outlet of the discharge conduit and the said point of connection preferably is a membrane valve which by means of a small membrane area controls the flow through the discharge conduit and which by means of a larger surface at its opposite side is exposed to the pressure of a source of gas under pressure.

This has the effect that during agitation, which means during functioning of the source of pressure or operation of the pump, the discharge conduit is closed whereas during discharge of the drink the valves opens. Moreover said valve easily can be cleaned in case necessary. Preferably the connection of the source of gas under pressure with the membrane valve has been provided with a pressure relief valve, in particular a pressure relief valve which is operated by a solenoid due to which it becomes possible to move said valve in the open position as soon as the pump is deenergized so that at the same time the pressure above the membrane valve has been provided with a pressure relief valve, in particular a pressure relief valve which is operated by a solenoid due to which it becomes possible to move said valve in the open position as soon as the pump is deenergized so that at the same time the pressure above the membrane of the membrane valve is relieved and discharge of the drink can take place.

It moreover is possible according to the invention to use two separate pumps, one for agitating the coffee and the other for operating the membrane valve.

The invention will appear from the description of the annexed drawing disclosing embodiments of the invention.

Fig. 1 is a schematical view of a coffee making machine according to the present invention.

Fig. 2 is a schematical view of a different coffee making machine according to the invention and Figure 3 is a transverse sectional view of a control valve as used in the machine of the invention.

Referring to the drawings in detail, the brewer 1 of a coffee making machine is equipped at its bottom portion 2 with a coffee filter 3 through which the coffee extract can be discharged via the pipe 4 and a valve 5, e.g. a solenoid operated valve, to the discharge pipe 6. The pipe 4 in front of the valve 5 has been connected to a separate pipe 7 with an air pump 8 and a back pressure valve 9. The pressures in the pipe 7 and in the discharge pipe are adjusted in such a way by means of the valves 5 and 9 respectively, that in operating the air pump 8, air or another applicable agitating gas is forced through the pipes 7 and 4 into the lower portion of the brewer compartment 2 in a direction which is opposite to the direction of discharging of the coffee extract via the filter element 3. Preferably the air is forced into the brewer while being evenly distributed all over the filter area below the coffee and hot water mixture inside the brewer 1.

By feeding air from the separate pipe 7 through pipe 4 into the brewer 1 by means of pump 8 the coffee mixture is agitated during a predetermined period of time. In the first place this remarkably may increase the degree of extraction of the coffee due to which the amount of coffee can be reduced.

Other advantages are:

1e The degree of extraction of the coffee can now be adjusted by the user himself without changing the quantity of the ground coffee by adjusting the quantity of air and/or time of the agitation. The taste of the coffee drink now can be individually adjusted without changing the amount of ground coffee and/or the quantity of water and/or the time of brewing. The degree of extraction depends on the degree of extracting taste substances from the ground coffee.

2e Due to the agitation of the mixture in the brewer 1 a movement is generated of lighter and smaller ground coffee particles into the upper region of the brewer compartment resulting into less sediment in a cup of coffee;

3e Because of the continuous flow of forced air blown through the filter 3 in an upward direction, the filter elememt is prevented from clogging in less frequent time.

Speed and volume of the air flow into the brewer define time and degree of the agitation. Accordingly the present invention allows a controllable degree of turbulence of the coffee mixture with the result that the user can adjust the desired taste of the coffee which after agitation can be delivered at 6.

The time of operation of pump 8 lies between a minimum period of time with a minimum degree of agitation and a miximum duration of time with a maximum degree of agitation without any need to change the quantity of coffee normally used in a coffee making machine. The back pressure or non-return valve 9 in the pipe 7 serves to prevent a flow of coffee extract into this pipe in the event that no air is forced into the brewer 2 by pump 8. The back pressure valve 9 prevents the fouling of the interior of air pump 8.

Coffee making machines according to the invention with predetermined agitation do allow for an imprivement of the coffee taste as well as adaptation to the taste of every individual user. Moreover it becomes possible to use rather slowly extracting coffee ground beans the aroma of which is much more appreciated. In the known coffee making machines fast extracting coffee had to be used, having the disadvantage that the coffee extract obtained from this coffee bean often had a bitter taste which is not appreciated by the majority of the consumers.

With the coffee making machine as described the forced air agitation can be adjusted from zero to its maximum, e.g. by means of a knob with a circumferential scale indicator to control the air quantity supplied during the agitation period and by using a time switch as well for the duration of the operation of the airpump 8.

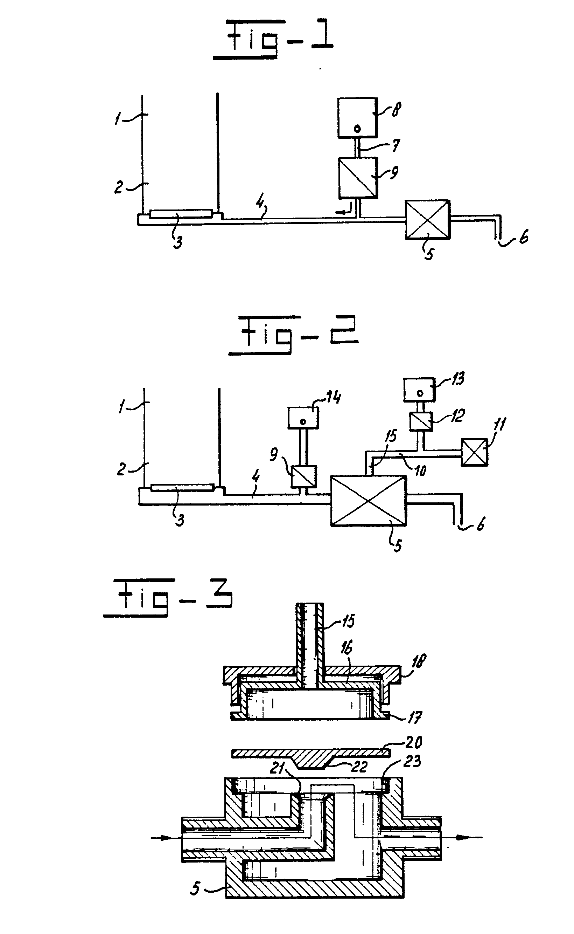

Figures 2 and 3 show a preferred embodiment of the coffee making machine according to the invention. The control valve 5 used in the embodiment of Fig. 2 has the construction shown in Fig. 3.

Said valve 5 has a membrane 20 with a small lower valve portion 22 cooperating with valve seat 21 in the flow path from pipe 4 towards dischage pipe 6.

This membrane 20 is placed in recess 23 of the valve housing and held in place by the flange 17 of a cup-shaped element 16 clamping over 18. The cup-shaped element 16 has a tube 15 connected to a pipe 10. Said pipe 10 is connected to an air pump 13 and has a solenoid valve 4. A second pump 14 with non-return valve 12 is connected to the pipe 4.

In case air has to be fed into the brewer 1 the valve (11) is closed.

The air delivered by the pump 13 has a slight pressure sufficient however to move the membrane 20 into its closing position with the valve portion 22 upon seat 21. This is possible because the upper surface of the membrane is considerably larger than the surface of portion 22. Pump 14 ensures that air flows through the non return valve 12 into the pipe 4 and hence into the brewer.

After agitation the pumps 13 and 18 stop, valve 11 opens and the pressure on top of membrane 20 is released.

Coffee now can flow through pipe 4, open valve 5 and pipe 6. Valve 9 prevents fouling of the pump 13.

The construction of valve 5 is such that cleaning if required easily can be done.

## Claims

1. Apparatus for preparing coffee, comprising a brewing space (1) for receiving said coffee and hot water, a filter (3) in the lower wall of said space (1), means (4, 7, 8, 9, 12, 14) for moving a gas under pressure from below said filter (3) upwardly through said filter (3) as well as a discharge conduit (4, 6) below said filter (3) characterized in that the discharge conduit (4, 6) has a valve (5) downstream the filter (3) and that said discharge conduit, between the filter (3) and said valve (5) has been connected to a source (8, 14) of gas under pressure capable of delivering a continuous flow into the discharge conduit (4) and through the filter after closure of the valve (5), said source (8, 14) having adjustable means for controlling the operation time and the quantity of gas supplied during the agitation period and that after completion of the operation time of the said source (8, 14) a valve (5), which valve forms the only means for controlling the flow of the drink through the filter and through the discharge conduit can be opened.

2. Apparatus as claimed in claim 1 characterised in that a non-return valve (9) has been arranged between the said source (8, 14) and the said point of connection, preventing flow in the direction towards the said source (8, 14).

3. Apparatus as claimed in claim 1 or 2, characterized in that the valve (5) between the outlet (6) of the discharge conduit (4) and the said point of connection is a membrane valve (20, 21, 22) which by means of a small membrane area (22) controls the flow through the discharge conduit (4) and by means of a larger surface at its opposite side is exposed to the pressure of a source (13) a gas under pressure.

4. Apparatus as claimed in claim 3, characterized in that the connection (10) of the source (13) of gas under pressure with the membrane valve (5) has been provided with a pressure relief valve (11).

5. Apparatus as claimed in claim 3 and 4, characterized in that there are two sources (13, 14) of gas under pressure, one (13) for operating the membrane valve (5) and one (8) for feeding gas into the discharge conduit (4).

## Patentansprüche

1. Maschine zur Herstellung von Kaffee, umfassend einen Zubereitungsraum (1) zur Aufnahme dieses Kaffees und heißen Wassers, einen Filter (3) in der unteren Wand dieses Raumes (1), Mittel (4, 7, 8, 9, 12, 14), um ein Gas unter Druck von unter dem Filter (3) aufwärts durch diesen Filter (3) zu bewegen sowie eine Ausflußleitung (4, 6) unter diesem Filter (3), dadurch gekennzeichnet, daß diese Ausflußleitung (4, 6) ein Ventil (5) stromabwärts zum Filter (3) hat und daß diese Ausflußleitung zwischen dem Filter (3) und diesem Ventil (5) mit einer Quelle (8, 14) für unter Druck stehendes Gas verbunden worden ist, welche in der Lage ist, einen kontinuierlichen Zufluß in die Ausflußleitung (4) und durch den Filter nach Schließung des Ventils (5) zu befördern, wobei diese Quelle (8, 14) regulierbare Mittel hat zur Kontrolle der Betriebszeit und der Menge an Gas, welches während der Agitationszeit zugeführt wird, und daß nach Beendigung der Betriebszeit dieser Quelle (8, 14) ein Ventil (5), welches das einzige Mittel zur Kontrolle des Getränkeflusses durch den Filter und durch die Ausflußleitung darstellt, geöffnet werden kann.

2. Maschine gemäß Anspruch 1, dadurch gekennzeichnet, daß ein Nicht-Rückschlagventil (8) zwischen dieser Quelle (8, 14) und diesem Verbindungspunkt angeordnet worden ist, welches einen Fluß in Ricthung dieser Quelle (8, 14) verhindert.

3. Maschine gemäß Anspruch 1 oder 2, dadurch gekennzeichnet, daß das Ventil (5) zwischen dem Auslaß (6) Ausflußleitung (4) und diesem Verbindungspunkt ein Membranventil (20, 21, 22) ist, welches mittels eines kleinen Membranbereichs (22) den Fluß durch die Ausflußleitung (4) kontrolliert und mittels einer größeren Oberfläche an seinem entgegengesetzten Ende dem Druck einer Quelle (13) eines unter Druck stehenden Gases ausgesetzt ist.

4. Maschine gemäß Anspruch 3, dadurch gekennzeichnet, daß die Verbindung (10) der Quelle (13) des unter Druck stehenden Gases mit dem Membranventil (5) mit einem Überdruckventil (11) ausgestattet worden ist.

5. Maschine gemäß Ansprüchen 3 und 4, dadurch gekennzeichnet, daß zwei Quellen (13, 14) von unter Druck stehendem Gas vorhanden sind, eine (13) zur Bedienung des Membranventils (5) und eine (8) zur Gaseinspeisung in die Ausflußleitung (4).

## Revendications

1. Appareil pour préparer du café, comportant un espace pour infusion (31) pour recevoir ledit café et l'eau chaude, un filtre (3) dans la paroi inférieure dudit espace (31), des moyens (4, 7, 8, 9, 12, 14) pour mouvoir un gaz sous pression, depuis dessous ledit filtre (3), vers le haut, à travers ledit filtre (3), ainsi qu'une conduite de sortie (4, 6) sous ledit filtre (3), caractérisé en ce que la conduite de sortie (4, 6) comporte un robinet (5) en aval du filtre (3); et en ce que ladite conduite de sortie, entre le filtre (3) et ledit robinet (5), a été relié à une source (8, 14) de gaz sous pression capable d'envoyer un flux continu dans la conduite de sortie (4) et à travers le filtre après fermeture du robinet (5), ladite source (8, 14) comportant des moyens réglables pour commander la durée de l'opération et la quantité de gaz envoyée au cours de la période d'agitation; et en ce qu'après écoulement de la durée de l'opération de ladite source (8, 14) ou peut ouvrir un robinet (5) qui forme l'unique moyen pour commander l'écoulement de la boisson à travers le filtre et dans la conduite de sortie.

2. Appareil selon la revendication 1, caractérisé en ce qu'un clapet antiretour (9) a été disposé entre ladite source (8, 14) et ledit point de connexion, pour empêcher un écoulement en direction de ladite source (8, 14).

3. Appareil selon la revendication 1 ou 2, caractérisé en ce que le robinet (5) situé entre la sortie (6) de la conduite de sortie (4) et ledit point de connexion est un robinet à soupape à membrane (20, 21, 22) qui, par une petite surface (22) de la membrane, commande l'écoulement dans le conduite de sortie (4) et, par une plus grande surface, du côté opposé, est exposé à la pression d'une source (13) d'un gaz sous pression.

4. Appareil selon la revendication 3, caractérisé en ce que la conduite de connexion (10) de la source (13) du gaz sous pression avec le robinet à soupape à membrane (5) est équipée d'une soupape de sûreté (11).

5. Appareil selon les revendications 3 et 4, caractérisé en ce qu'il y a deux sources (13, 14) de gaz sous pression, l'une (13) pour le fonctionnement du robinet à soupape à membrane (5) et l'autre (8) pour l'envoi du gaz dans le conduite de sortie (4).

## Fig-1

## Fig-2

## Fig-3